# FASCICULE DE BREVET EUROPEEN

(11) **EP 2 062 941 B1**
(45) Date de publication et mention de la délivrance du brevet: **15.06.2016**
(21) Numéro de dépôt: 08169559.5
(22) Date de dépôt: 20.11.2008
(51) Int. Cl.: C08L 95/00, C08L 91/00, C08K 5/103, C09D 195/00, C04B 26/26, E01B 7/22, E04B 1/66, C08L 21/00, C04B 111/00

(54) **Liant thermofusible à base d'asphalte ou de bitume à température de fabrication abaissée comprenant un triglycéride d'acides gras satures**
Heißschmelzbindemittel auf Asphalt- oder Bitumenbasis mit niedriger Herstellungstemperatur, das ein Triglyzerid von gesättigten Fettsäuren umfasst
Thermofusible binder based on asphalt or bitumen with reduced manufacturing temperature comprising a saturated fatty acid triglyceride

(30) Priorité: 20.11.2007 FR 0759166
(43) Date de publication de la demande: 27.05.2009
(73) Titulaire: Eurovia, 92500 Rueil-Malmaison (FR)
(72) Inventeur: Faucon Dumont, Stéphane, 33127 MARTIGNAS (FR); Delfosse, Frédéric, 33600 PESSAC (FR); Gianetti, Thomas, 33200 BORDEAUX (FR)
(74) Mandataire: Regimbeau

(56) Documents cités:
- WO-A-2004/033388
- FR-A1- 2 855 523
- FR-A1- 2 894 587
- US-A- 3 287 296
- US-A1- 2002 114 894
- ANONYMOUS: 'European Standard EN 13108-1:2006, Bituminous mixtures-Materials specifications-Part 1: Asphalt concrete', [en ligne] 01 Mai 2006, pages 1 - 41, XP055140802 Extrait de l'Internet: <URL:http://www.aapaq.org/q/2012st/doc/REF/ B13_CEN_13108-1_May_2006_English.pdf> [extrait le 2014-09-17]
- ANONYMOUS: 'DIN EN 12597. Bitumen und bitumenhaltige Bindermittel - Terminologie = Bitumen and bituminous binders - Terminolgy' DEUTSCHE NORMEN. DIN NORM, vol. EN-12597, 01 Janvier 2001, pages 102 - 112, XP009144597
- ANONYMOUS: 'NF EN 13043, Granulats pour mélanges hydrocarbonés et pour enduits superficiels utilisés dans la construction des chaussées, aérodromes et d'autres zones de circulation' 01 Août 2003, pages 1 - 53, XP055032509
- ANONYMOUS: 'IODINE VALUE' WIKIPEDIA, THE FREE ENCYCLOPEDIA, [en ligne] 13 Avril 2014, page 3PP, XP055141035 Extrait de l'Internet: <URL:http://en.wikipedia.org/wiki/Iodine_va lue> [extrait le 2014-09-18]

## Description

La présente invention concerne la formulation d'un produit asphaltique ou bitumineux, qui est un mélange coulable à chaud comprenant un liant thermofusible de type bitumineux avec respectivement une charge minérale ou avec des granulats et éventuellement une charge minérale, , éventuellement additivé d'un polymère, qui comprend au moins un additif destiné à abaisser la température de fabrication et de mise en oeuvre de ce liant dans des applications routières tout en conservant les propriétés requises pour ses applications voire les améliorer.

Le bitume est un produit viscoélastique qui nécessite pour être manipulé d'être chauffé, mis en émulsion ou additivé par des mélanges avec des fluxants d'origine pétrolière, pétrochimique, carbochimique voire végétale afin de réduire sa viscosité.

Dans tous les cas de figure, l'homme de l'art cherchera à ce que le bitume retrouve ses propriétés en réduisant au maximum les contraintes environnementales.

Parmi les domaines d'application visés, nous pouvons citer les produits asphaltiques ou bitumineux, qui pourront ainsi être fabriqués et mis en oeuvre à des températures significativement plus faibles que celles nécessaires lorsque lesdits produits contiennent un liant dans lequel l'additif selon l'invention est absent, ainsi que les enduits superficiels.

Par « produit asphaltique », dans la présente invention, on entend un mélange coulable à chaud de liant thermofusible de type bitumineux avec une charge minérale. Un produit asphaltique ne nécessite pas d'être compacté au rouleau lors de sa mise en place. Pour cela, il doit être facile à couler et à étaler. A titre d'exemple de produit asphaltique, on peut notamment citer les asphaltes, les mastics, les joints de pavé, les produits de scellement à chaud.

Par « produit bitumineux », dans la présente invention, on entend un mélange coulable à chaud de liant thermofusible de type bitumineux avec des granulats et éventuellement avec une charge minérale. Un produit bitumineux est ensuite classiquement compacté au rouleau.

Les charges minérales sont constituées d'éléments inférieurs à 0,063 mm et éventuellement d'agrégats provenant de matériaux recyclés, de sable dont les éléments sont compris entre 0,063 mm et 2 mm et éventuellement de gravillons, dont les éléments ont des dimensions supérieures à 2 mm et éventuellement d'alumino-silicates. Les alumino-silicates sont des composés inorganiques à base de silicates d'aluminium et de sodium ou d'autres métaux comme le potassium ou le calcium. Les alumino-silicates permettent de réduire la viscosité du liant thermofusible ; ils se présentent sous la forme de poudre et/ou de granulats.

Le terme « granulat(s) » désigne des granulats minéraux et/ou synthétiques, notamment des agrégats d'enrobés, qui sont classiquement introduits dans les liants bitumineux pour fabriquer des mélanges de matériaux de construction routière.

La préparation d'un produit asphaltique (tel que l'asphalte coulé) ou d'un produit bitumineux comprend le mélange du liant et des charges ou des granulats à une température, appelée température de fabrication, puis le coulage de ce mélange à une température de mise en oeuvre, suivi d'un refroidissement. Des températures élevées de fabrication et de mise en oeuvre représentent une forte dépense d'énergie et simultanément une pollution environnementale due aux effluents gazeux indésirables. Des plages de température de fabrication et de mise en oeuvre élevées induisent, pour certains types de bitumes, des décompositions qui dégagent des fumées bleues.

Ainsi, on cherche à abaisser la température de fabrication et de mise en oeuvre des produits asphaltiques ou bitumineux.

Des solutions pour abaisser la température de fabrication des produits asphaltiques ont déjà été proposées. Ainsi la demande de brevet FR 2 855 523 propose l'ajout d'une cire d'hydrocarbure dont le point de fusion est supérieur à 85°C (poids moléculaire compris entre 500 et 6000 g/mol) et d'un deuxième additif qui est une cire d'ester d'acide gras, cette cire étant d'origine synthétique, végétale, ou végétale fossile et ayant un point de fusion inférieur à 85°C (points de fusion mesurés selon les normes ASTM D3945 et D3418). Des exemples d'esters d'acides gras sont des esters d'acide montanique (ou esters d'acide octasonoïque), acide de formule C₂₈H₅₆O₂, ou des esters d'acide lignocérique (ou ester d'acide tétracosanoïque), acide de formule C₂₄H₄₈O₂. Toutefois, la longueur de la chaîne hydrocarbonée provenant de l'alcool n'est pas précisée.

Le brevet US 6588974 décrit l'utilisation de cires synthétiques de type Fischer tropsch pour réduire la température de mise en oeuvre, faciliter le compactage et améliorer la résistance à la déformation sous charge du revêtement.

La présente invention a pour objet de proposer un autre type d'additif, qui peut être utilisé dans le liant pour abaisser la température de fabrication et de mise en oeuvre des produits asphaltiques et bitumineux. Bien entendu, l'ajout de cet additif ne devra pas être préjudiciable aux propriétés et performances des produits asphaltiques ou bitumineux obtenus.

Dans le cadre de l'invention, l'additif est au moins un triglycéride d'acides gras, ledit acide gras étant choisi dans le groupe constitué par les acides gras saturés, comprenant de 12 à 30 atomes de carbone, avantageusement de 12 à 20 atomes de carbone, et pouvant être substitués par au moins une fonction hydroxyle ou par un radical alkyle en C₁-C₄. Un acide gras saturé ne comporte pas d'insaturations (double ou triple liaison carbone carbone).

Dans le cadre de la présente invention, on entend par les termes « triglycéride d'acide gras » un dérivé glycérol dont les trois fonctions hydroxyles sont substituées par un acide gras tel que défini précédemment. On peut inclure dans cette définition des quantités faibles (moins de 5% en poids par rapport à la quantité massique de triglycérides engagée) de diglycérides, de monoglycérides et même d'acide gras libres.

Dans le cadre de la présente invention, on entend par les termes « substitués par au moins une fonction hydroxyle ou par un radical alkyle en C₁-C₄ » un acide gras dont au moins un atome de carbone est substitué par une fonction hydroxyle (avantageusement par une seule fonction hydroxyle) et/ou par un radical alkyle contenant de 1 à 4 atomes de carbone (on peut citer les radicaux méthyle, éthyle, propyle, butyle, t-butyle, isopropyle). L'acide gras, s'il est substitué, est avantageusement uniquement hydroxylé, en particulier par une seule fonction hydroxyle.

Le triglycéride comprend de 39 à 93 atomes de carbone, avantageusement 39 à 63 atomes de carbone, plus avantageusement 51 à 63 atomes de carbone. On peut envisager des triglycérides mixtes (les molécules d'acides gras constituant le triester sont distinctes) ou homogènes (les molécules d'acides gras constituant le triester sont identiques), avec une préférence pour les triglycérides homogènes. Selon une variante préférée de l'invention, les molécules d'acides gras comprennent de 12 à 30 atomes de carbone, avantageusement 12 à 20 atomes de carbone, plus avantageusement 16 à 20 atomes de carbone.

On pourrait envisager l'emploi de diglycérides comprenant ce même nombre d'atomes de carbone (39 à 93) dans lesquels les molécules d'acides gras auraient des chaînes plus longues. Toutefois, de tels diglycérides ne peuvent être obtenus que par synthèse. On préfère les triglycérides d'origine naturelle.

A titre de molécules d'acides gras saturés préférées, on peut notamment citer : l'acide 12-hydroxy-octadécanoïque (C18, aussi connu sous le nom d'acide 12-hydroxystéarique), l'acide hexadécanoïque (C16, aussi connu sous le nom d'acide palmitique), l'acide octadécanoïque (C18, aussi connu sous le nom d'acide stéarique), l'acide 9,10-dihydroxy- octadécanoïque (C18, aussi connu sous le nom d'acide dihydroxystéarique), l'acide icosanoïque (C20, aussi connu sous le nom d'acide arachidique), l'acide nonadécanoïque (C19).

Selon une variante avantageuse de l'invention, l'additif comprend au moins un triglycéride dont une molécule d'acide gras est constituée de l'acide 12-hydroxy-octadécanoïque.

La teneur en additif sera comprise entre 1 et 20% en masse par rapport à la masse totale en liant. En particulier, dans un produit asphaltique, la teneur en additif sera avantageusement comprise entre 6 et 12% en masse par rapport à la masse totale en liant. Lorsque le liant est destiné à la préparation d'enrobés bitumineux, la teneur en additif sera avantageusement comprise entre 1 et 6% en masse par rapport à la masse totale en liant.

Le triglycéride peut être obtenu par synthèse, d'une manière connue de l'homme du métier, ou est avantageusement d'origine naturelle. Pour les plantes supérieures et les animaux, les acides gras, qui constituent ensuite les triglycérides, les plus communs ont de 14 à 20 atomes de carbone, avec une nette prédominance de ceux à 16 ou 18 atomes de carbone. Les acides gras dont le nombre de carbone est supérieur à 24 sont essentiellement des composants des cires protectrices fabriquées par des plantes, des bactéries et des insectes.

Dans la cadre de l'invention, la source de triglycérides est une huile végétale hydrogénée.

Par huile végétale, on entend les huiles, brutes ou raffinées, obtenues par trituration de graines, noyaux ou fruits de végétaux, en particulier les plantes oléagineuses, telles que, de manière non limitatives, les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah et d'argan.

L'huile végétale est hydrogénée, c'est-à-dire qu'elle a subi un procédé d'hydrogénation par lequel les éventuelles insaturations (doubles liaisons) des acides gras naturels sont hydrogénées, dans le but d'obtenir des acides gras essentiellement saturés.

L'huile végétale hydrogénée présente un indice d'iode selon la norme ISO 3961 inférieur à 10 g d'I₂/100g, plus avantageusement inférieur à 5 g d'I₂/100g, encore plus avantageusement inférieur à 3,5 g d'I₂/100g. L'indice d'iode d'un lipide est la masse de diiode (I₂) (exprimée en g) capable de se fixer sur les insaturations (double liaison le plus souvent) des acides gras de 100 g de matière grasse.

L'huile végétale hydrogénée présente avantageusement un indice d'acide selon la norme NF T 60-204 inférieur à 10 mg KOH/g, plus avantageusement un indice d'acide inférieur à 5 mg KOH/g, encore plus avantageusement un indice d'acide inférieur à 2 mg KOH/g. L'indice d'acide est la masse d'hydroxyde de potassium (exprimé en mg) nécessaire pour neutraliser les acides gras libres contenus dans un gramme de matière grasse.

L'huile végétale hydrogénée présente avantageusement un indice de saponification compris entre 150 et 200 mg KOH/g, plus avantageusement un indice de saponification compris entre 170 et 190 mg KOH/g. L'indice de saponification correspond à la masse d'hydroxyde de potassium en mg nécessaire pour neutraliser les acides gras libres et pour saponifier les acides gras combinés dans un gramme de corps gras.

L'huile végétale hydrogénée peut comporter des fonctionnalités hydroxyles, elle présente alors avantageusement un indice d'hydroxyle compris entre 140 et 180 mg KOH/g, plus avantageusement un indice d'hydroxyle compris entre 150 et 170 mg KOH/g. L'indice d'hydroxyle est le nombre de milligrammes d'hydroxyde de potassium qui serait nécessaire pour neutraliser l'acide acétique qui se combine par acétylation à un gramme de produit. Pratiquement, on utilise l'anhydride acétique et on tient compte dans le calcul de l'indice d'hydroxyle de la valeur de l'indice d'acide.

La teneur en insaponifiables dans l'huile est avantageusement inférieure à 10%, plus avantageusement inférieure à 5%, encore plus avantageusement inférieure à 1%, pourcentage exprimé en poids par rapport au poids total de l'huile.

La teneur en huile végétale hydrogénée sera comprise entre 1 et 20 % en masse par rapport à la masse totale en liant. En particulier, dans un produit asphaltique, la teneur en huile végétale hydrogénée sera avantageusement comprise entre 6 et 12% en masse par rapport à la masse totale en liant. Lorsque le liant est destiné à la préparation d'enrobés bitumineux, la teneur en huile végétale hydrogénée sera avantageusement comprise entre 1 et 6% en masse par rapport à la masse totale en liant.

Pour permettre de fluidifier le liant lors de sa mise en oeuvre, l'additif présente une température de fusion supérieure à 60 °C, avantageusement supérieure à 80°C. L'additif a avantageusement une température de fusion inférieure à 140°C, plus avantageusement inférieure à 120°C.

Il est également nécessaire que le produit asphaltique ou bitumineux conserve les autres caractéristiques d'un produit asphaltique ou bitumineux classique, en particulier des valeurs d'indentation et de retrait requises.

Les valeurs d'indentation sont mesurées suivant la norme NF EN 12697-21. On mesure l'enfoncement en dixièmes de millimètres d'un poinçon dans le produit asphaltique, pour une durée et une température données. Les valeurs d'indentation permettent de caractériser la dureté de l'asphalte coulé. Selon le Cahier des Charges de l'Office Français des Asphaltes, le produit asphaltique ou bitumineux doit avoir une valeur d'indentation, mesurée à 40°C, comprise entre 15 et 35-45 dixièmes de millimètres, en fonction de l'application visée (asphalte pour trottoir ou asphalte de chaussée par exemple). Les asphaltes pour étanchéité doivent présenter des valeurs d'indentation conformes aux spécifications de la norme NF EN 12970.

De plus, il faut également que le produit asphaltique ou bitumineux ne présente pas des valeurs de retrait libre trop importantes. Le retrait libre (mesuré en millimètres) correspond à une diminution de volume accompagnant la prise et le durcissement du produit asphaltique ou bitumineux et induite par le refroidissement du produit asphaltique ou bitumineux. Un retrait libre important conduit à des désordres préjudiciables à la pérennité du produit asphaltique ou bitumineux. Le retrait excessif risque de dégrader les caractéristiques mécaniques et nuire à l'étanchéité du produit asphaltique ou bitumineux.

L'invention a donc pour but de fournir un liant qui puisse être fabriqué et mis en oeuvre à plus basse température tout en préservant des propriétés performantes pour le produit asphaltique ou bitumineux obtenu.

Le bitume peut être un bitume naturel, un bitume d'origine végétale ou un bitume d'origine pétrolière, éventuellement modifié par ajout de polymères. Les produits asphaltiques et bitumineux peuvent contenir des teneurs importantes (allant de 0% à 100% en poids, avantageusement de 20% à 50% en poids, par rapport au poids total) de produits de recyclage (agrégats de produit asphaltique, agrégats d'enrobé).

L'additif selon l'invention peut être utilisé seul ou en mélange avec d'autres additifs.

Comme autre additif, on peut introduire un fluxant qui permet d'abaisser la viscosité du liant thermofusible (propriétés de solvant) et ainsi améliorer les propriétés aux basses températures (refroidissement des températures de mise en oeuvre aux températures d'usage). Ces fluxants, également appelés huiles de fluxage, peuvent être à base de matières grasses animales et/ou végétales (huiles et graisses), permettant ainsi d'éviter le dégagement de composés organiques volatils. On pourra avantageusement utiliser tout fluxant d'origine naturelle, éventuellement modifié par une réaction chimique (qui n'est pas une hydrogénation). L'huile de fluxage peut être une huile végétale, un résidu de distillation d'une huile végétale, l'un de ses dérivés tels que sa partie acide gras, un mélange d'acides gras, un produit de transestérification (par un alcanol en C₁-C₆) tel qu'un ester méthylique de l'huile végétale ou un dérivé de résine alkyde de l'huile végétale. L'huile végétale comprend des chaînes grasses insaturées. De plus, l'huile végétale est avantageusement soumise à un traitement d'isomérisation dans le but d'augmenter le nombre de doubles liaisons C=C conjuguées, qui se traduit par une augmentation du pouvoir siccatif. L'huile végétale peut également être soumise à un traitement destiné à modifier chimiquement les chaînes grasses par introduction de fonctions chimiques (susceptibles de réagir avec des fonctions chimiques présentes dans le liant et/ou avec des fonctions chimiques d'autres molécules de fluxant). Pour se faire, l'huile végétale peut être fonctionnalisée dans le but d'introduire les groupements fonctionnels suivants : groupes acides carboxylique, époxyde, péroxyde, aldéhyde, éther, ester, alcool et cétone (par oxydation, par exemple).

Par huile végétale, on entend les huiles, brutes ou raffinées, obtenues par trituration de graines, noyaux ou fruits de végétaux, en particulier les plantes oléagineuses, telles que, de manière non limitatives, les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah et d'argan., leurs dérivés et leurs mélanges. Ces huiles pourront être utilisées telles quelles ou avec un agent siccatif ou après avoir subi une fonctionalisation chimique -tel que décrit précédemment-, dans des proportions comprises entre 0 et 1 ppc (partie pour cent en poids) et avantageusement entre 0 et 0,6 ppc, par rapport au poids du produit asphaltique ou bitumineux.

Par agent siccatif, on entend tout composé capable d'accélérer la réaction de siccativation du plastifiant. Il s'agit par exemple des sels métalliques, notamment des sels organiques de cobalt, de manganèse et de zirconium.

Comme autre additif, on peut également citer des cires d'origines animale, végétale ou d'hydrocarbures, en particulier des cires hydrocarbonées à chaîne longue (plus de 30 atomes de carbone). Cet additif permet lui aussi d'abaisser la température de fabrication et de mise en oeuvre du liant thermofusible.

La cire hydrocarbonée peut être de poids moléculaire faible à élevé. Un poids moléculaire élevé est par exemple un poids moléculaire compris entre 10 000 et 20 000 g/mol, notamment un poids moléculaire compris entre 12 000 et 15 000 g/mol. Un poids moléculaire faible est un poids moléculaire supérieur à 400 g/mol et inférieur à 6 000 g/mol, dans le cas de cire hydrocarbonée à base de polyéthylène ou également de cire hydrocarbonée obtenue par la synthèse de Fischer Tropsch (telle que la cire Fischer Tropsch commercialisée sous le nom commercial Sasobit® par la société Sasol).

Selon une variante avantageuse de l'invention, on utilise en association une cire ayant un point de fusion (défini) supérieur à 80°C, plus avantageusement compris entre 95°C et 130°C.

Le liant thermofusible, selon cette variante, contient avantageusement 1 à 20% en masse de ladite cire par rapport à la masse totale du liant.

Comme additif supplémentaire, on peut également introduire un dérivé d'acide gras choisi dans le groupe constitué par les diesters d'acide gras, les éthers d'acide gras, les cires d'amides, les cires de diamide et leurs mélanges.

Cet autre additif permet d'abaisser encore plus la température de fabrication et de mise en oeuvre du produit asphaltique ou bitumineux, tout en assurant une conservation des bonnes propriétés mécaniques du produit asphaltique ou bitumineux, en particulier des valeurs d'indentation, de retrait libre et module de Young.

On appelle diester un produit issu de la réaction de deux alcools et d'un diacide carboxylique. Le diester d'acide gras est de préférence un diester d'origine végétale, synthétique, animale ou végétale fossile dont le nombre d'atomes de carbone est compris entre 20 et 56 et préférentiellement compris entre 26 et 48. Le diester d'acide gras présente avantageusement un point de fusion supérieur ou égal à 70°C. Les diesters issus de la réaction de deux alcools gras et de l'acide fumarique sont préférés. Lesdits alcools gras comprennent avantageusement 18 à 22 atomes de carbone. Comme exemple de diester de l'acide fumarique on peut citer le fumarate de behenyl.

On appelle éther un composé dans lequel un atome d'oxygène est lié par liaison simple à deux groupes organiques identiques ou différents. L'éther d'acide gras est de préférence un éther d'acide gras d'origine végétale, synthétique, animale ou végétale fossile ayant un nombre d'atomes de carbone compris entre 20 et 50, préférentiellement compris entre 30 et 40. L'éther d'acide gras présente avantageusement un point de fusion supérieur ou égal à 60°C. Comme exemple d'éther d'acide gras préféré, on peut citer le distéaryl éther (C₁₈H₃₇OC₁₈H₃₇).

On appelle cire d'amide un produit issu de la réaction d'un acide gras (12 à 30 atomes de carbone, avantageusement 16 à 20 atomes de carbone) avec une amine à chaîne longue (12 à 30 atomes de carbone, avantageusement 16 à 20 atomes de carbone). La cire d'amide présente avantageusement un point de fusion supérieur ou égal à 80°C (jusqu'à 115°C).

On appelle cire de diamide un produit issu de la réaction de deux amines et d'un diacide carboxylique. Au moins une des amines est une amine à chaîne longue (12 à 30 atomes de carbone, avantageusement 16 à 20 atomes de carbone), avantageusement les deux amines sont des amines à chaînes longue. Le diacide carboxylique est avantageusement l'acide fumarique. La cire de diamide présente avantageusement un point de fusion supérieur ou égal à 80°C.

Comme additif supplémentaire, on peut également introduire une résine naturelle, éventuellement modifiée, d'origine végétale.

La résine permet d'améliorer la maniabilité du produit asphaltique ou bitumineux par augmentation de son module de richesse. Par ailleurs, la résine apporte aux températures de service une bonne stabilité dimensionnelle. Le produit asphaltique ou bitumineux a donc une bonne résistance sous charge statique ou dynamique.

La majorité des résines naturelles ou naturelles modifiées d'origine végétale n'ont pas de point de fusion déterminé mais présentent une zone de ramollissement. Ce sont des composés non cristallins. La résine présente avantageusement un point de ramollissement inférieur à 130°C, encore plus avantageusement inférieur à 120°C et en outre avantageusement supérieur à 65°C.

Le liant thermofusible, selon la première variante, contient avantageusement 1 à 20% en masse de ladite résine d'origine végétale par rapport à la masse totale du liant.

La résine d'origine végétale contient avantageusement l'acide abiétique ou ses dérivés, notamment l'acide déhydroabiétique, l'acide néoabiétique, l'acide palustrique, l'acide pimarique, l'acide lévopimarique, l'acide isopimarique.

La résine d'origine végétale est avantageusement choisie dans le groupe constitué par les colophanes naturelles ou naturelles modifiées, les esters de colophane, les savons de colophane, les terpènes, le tall oil, le dammar, les résines accroïdes. La résine d'origine végétale est plus particulièrement une résine de colophane, par exemple le glycérol ester de colophane maléique.

Le liant thermofusible selon l'invention peut également comprendre d'autres additifs pour abaisser la température de fabrication, la température de mise en oeuvre et/ou pour améliorer les conditions de mélange et la maniabilité. En particulier, le liant thermofusible peut comprendre une zéolithe, naturelle et/ou synthétique, ou sa phase de synthèse initiale amorphe.

La zéolithe est capable de libérer sous l'action de la chaleur (c'est-à-dire à une température supérieure à 110 °C) des molécules d'eau qui se trouvent entre les couches ou les interstices de son réseau cristallin. La libération de cette eau emprisonnée physiquement, appelée « eau zéolithique », permet d'abaisser la température de fabrication et de mise en oeuvre et surtout d'améliorer les conditions de mélange et la maniabilité du mélange. La zéolithe peut être introduite sous forme pulvérulente (diamètre d'environ 10 µm) ou sous forme de granulés, lesdits granulés comprenant de fines particules de zéolithe agrégées au moyen d'un liant ou d'une colle (dérivé de cellulose, en particulier carboxyméthylcellulose), lesdites fines particules ayant un diamètre moyen compris entre 2 µm et 4µm. On préfère introduire la zéolithe sous forme de granulés, ce qui permet, outre une maniabilité plus aisée (meilleur maniement, formation de poussière restreinte, meilleure fluidité, pas de cuisson), une distribution améliorée et plus rapide de la zéolithe lors de la fabrication du produit asphaltique.

La zéolithe utilisée est avantageusement une zéolithe fibreuse, une zéolithe lamellaire et/ou une zéolithe cubique. La zéolithe utilisée peut appartenir au groupe de saujasites, chabasites, phillipstes, clilioptilolites, et/ou paulingites.

Par comparaison aux zéolithes de sources naturelles, les zéolithes artificielles ont souvent l'avantage de présenter une homogénéité et une qualité constante, ce qui est avantageux notamment pour la finesse requise. Ainsi, la zéolithe utilisée est avantageusement une zéolithe synthétique du type A, P, X et/ou Y. De préférence, on utilisera un granulé de zéolithe de type A, notamment de la formule brute Na₁₂(AlO₂)₁₂(SiO₂)₁₂, 27 H₂O où Na₂O est de 18 %, Al₂O₃ de 28 %, SiO₂ de 33 % et H₂O de 21 %.

Le liant peut comprendre avantageusement 0,1 à 2 ppc de zéolithe.

La zéolithe peut être ajoutée lors de la préparation du liant avant son transport (dans des unités de fabrications qui mélangent, chauffent, malaxent tous les éléments de base) dans des camions porteurs, malaxeurs ou au dernier moment, avant coulée du produit asphaltique ou bitumineux, une fois que les camions sont arrivés sur les sites.

Le liant thermofusible peut comprendre en outre un élastomère ou un plastomère, notamment un copolymère de styrène-butadiène-styrène, de styrène-butadiène, ou de styrène-isoprène-styrène ou notamment un copolymère d'éthylène.

Le liant thermofusible peut également comprendre des tensioactifs, de la chaux, des alumino-silicates et d'autres additifs classiquement introduit dans les produits asphaltiques et les enrobés bitumineux.

L'invention a également pour objet un procédé de préparation d'un produit asphaltique coulable à chaud dans lequel on mélange un liant thermofusible, ledit liant thermofusible étant éventuellement additivé de polymères (notamment élastomères et/ou plastomères), avec des charges minérales et/ou synthétiques, des agrégats d'asphalte, et au moins l'additif selon l'invention (triglycéride d'acides gras saturés, en particulier huile végétale hydrogénée) et éventuellement les autres additifs (tels que notamment un fluxant, une cire, un dérivé d'acide gras - diester, éther, amide, diamide-, une résine, une zéolithe et autres additifs classiques), le procédé étant caractérisé par sa température de mélange qui est comprise entre 140°C et 180°C.

Il semble que l'ordre d'introduction des constituants n'a pas d'influence sur les propriétés du produit asphaltique obtenu. Les différents additifs peuvent être ajoutés dans tout ordre, voire simultanément.

Les produits asphaltiques sont classiquement fabriqués à des températures variant de 200°C à 270°C. Par l'ajout de l'additif selon l'invention (qui est capable d'abaisser la température de fabrication du produit asphaltique par rapport à celle du produit de base), le produit asphaltique peut être fabriqué à une température plus basse qu'habituellement, soit à une température comprise entre 140°C et 180°C. De plus, il peut également être coulé, c'est-à-dire mis en oeuvre, à cette température plus basse qu'habituellement.

L'invention a également pour objet un produit asphaltique coulable à chaud qui contient un liant thermofusible selon l'invention et des charges, minérales et/ou synthétiques et des agrégats d'asphalte. Le produit asphaltique peut en outre comprendre des additifs tels que des tensioactifs, de la chaux ou des aluminosilicates. Le produit asphaltique peut être obtenu par les procédés selon l'invention, décrits précédemment.

L'invention a aussi pour objets :
- un mastic, qui comprend un liant thermofusible selon l'invention (comprenant l'additif selon l'invention) et des charges minérales de 0/6 mm et éventuellement un ou plusieurs polymère(s) ;
- un joint de pavés, qui comprend un liant thermofusible selon l'invention (comprenant l'additif selon l'invention) et des charges minérales et éventuellement un ou plusieurs polymère(s) ;
- un produit de scellement à chaud, qui comprend un liant thermofusible selon l'invention (comprenant l'additif selon l'invention) et des charges minérales et éventuellement un ou plusieurs polymère(s).
Pour ces produits (mastic, joint de pavés, produit de scellement à chaud), le pourcentage massique liant thermofusible/charges minérales est avantageusement compris entre 20/80 et 80/20. Ces produits peuvent être obtenus par les procédés selon l'invention, décrits précédemment.

Un autre objet de l'invention est un procédé de préparation d'enrobés bitumineux, dans lequel on mélange un liant thermofusible, ledit liant thermofusible étant éventuellement additivé de polymères (notamment élastomères et/ou plastomères), avec des charges minérales et/ou synthétiques, des agrégats d'enrobés, et au moins l'additif selon l'invention (triglycéride d'acides gras saturés, en particulier huile végétale hydrogénée) et éventuellement les autres additifs (tels que notamment un fluxant, une cire, un dérivé d'acide gras - diester, éther, amide, diamide-, une résine, une zéolithe et autres additifs classiques), le procédé étant caractérisé par sa température de mélange qui est comprise entre 90°C et 130°C.

Il semble que les constituants peuvent être introduits dans tout ordre désiré. Les différents additifs peuvent être ajoutés dans tout ordre, voire simultanément.

Les enrobés bitumineux sont classiquement fabriqués à des températures variant de 150°C à 200°C. Par l'ajout d'au moins l'additif selon l'invention (triglycéride d'acides gras saturés, en particulier huile végétale hydrogénée), qui est capable d'abaisser la température de fabrication, les enrobés bitumineux peuvent être fabriqués et utilisés à une température plus basse qu'habituellement, soit à une température comprise entre 90°C et 130°C.

L'invention a pour autre objet des enrobés bitumineux contenant un liant thermofusible selon l'invention, des agrégats d'enrobés (ou autres granulats) et des charges minérales et/ou synthétiques. Les enrobés bitumineux peuvent en outre comprendre des additifs tels que des tensioactifs (cationiques, anioniques, amphotères ou non ioniques), de la chaux ou des aluminosilicates ou d'autres additifs classiquement introduits dans les bétons bitumineux. Les enrobés bitumineux peuvent être obtenus par les procédés selon l'invention, décrits précédemment.

L'invention a aussi pour objet l'utilisation d'un produit asphaltique selon l'invention ou d'enrobés bitumineux selon l'invention pour la fabrication de revêtement de chaussées, de trottoirs ou autres aménagements urbains, de couches d'étanchéité d'ouvrages et bâtiments, de mastic, de joint de pavés, de produit de scellement à chaud (tel que défini dans la norme NF EN 14188-1).

Le produit asphaltique peut également être utilisé pour la fabrication d'enrobés bitumineux.

Grâce à l'invention, il est possible de disposer d'un liant qui permet de réaliser des produits asphaltiques ou bitumineux à des températures de fabrication et de mise en oeuvre suffisamment basses pour supprimer sensiblement les émissions de fumée tout en préservant les propriétés mécaniques des produits asphaltiques ou bitumineux obtenus.

Les exemples qui suivent illustrent la présente invention mais ne sont pas limitatifs. Les valeurs d'indentation, de retrait libre et de contrainte à la rupture ont été mesurées selon les modes opératoires qui suivent. Les pourcentages indiqués sont des pourcentages pondéraux par rapport au poids total du produit asphaltique.

### Indentation :

Les essais d'indentation sont réalisés suivant la norme NF EN 12697-21. Cette norme décrit une méthode de mesure de l'indentation d'un asphalte coulé lorsqu'il est soumis à la pénétration d'un poinçon normalisé cylindrique avec embout plat circulaire, à des valeurs données de température et de charge et pour un temps d'application fixé.

Le poinçon a un diamètre de (25,2±0,1) mm pour une surface de 500 mm²
(11,3±0,1) mm pour une surface de 100 mm²
(6,35±0,1) mm pour une surface de 31,7 mm²

Les échantillons sont coulés dans des moules à la température de fabrication du produit asphaltique et laissé refroidir à l'air libre.

Les échantillons sont ensuite immergés pendant au moins 60 min dans le bain thermostatique régulé à la température d'essai. Ensuite, l'éprouvette est placée sous l'appareil de mesure. Plusieurs essais sont effectués sur la même éprouvette ; le poinçon n'est pas placé à moins de 30 mm du bord et à moins de 30 mm de l'emplacement de l'essai précédent.

Les conditions d'essai sont conformes au tableau 1 suivant :

**Tableau 1 : conditions d'essai**

| Paramètre | Type | | | |
|---|---|---|---|---|
| | Essai W | Essai A | Essai B | Essai C |
| Température | 25°C, 35°C, 45°C | 25°C | 40°C | 25°C, 35°C, 40°C |
| Surface du poinçon | 31,7 mm² | 500 mm² | 500 mm² | 100 mm² |
| Charge appliquée | (311±2) N | (515±3) N | (515±3) N | (515±3) N |
| Durée d'application de la charge | 70s | 6 min | 31 min | 31 min |
| Mesure entre | 10s et 70s | 1 min et 6 min | 1 min et 31 min | 1 min et 31 min |

Les essais sont recommencés 5 fois sur la même éprouvette dans le cas de l'essai W et 3 fois dans le cas de essais A, B et C.

### Retrait libre :

L'essai consiste à couler l'asphalte chaud dans un moule rectangulaire en invar et, après arasement, de faire subir des contraintes thermiques à cet échantillon. Les variations dimensionnelles de l'éprouvette par rapport à l'origine sont mesurées à l'aide d'un pied à coulisse.

La moyenne de la variation de la longueur additionnée à celle de la largeur exprimée en mm est définie comme la valeur de retrait libre de l'asphalte après son refroidissement.

Des mesures sont effectuées après 24 H à 20°C puis 24 H à -20 °C et pour finir après 4 H à température ambiante.

### Huile hydrogénée

L'huile hydrogénée utilisée dans les exemples qui suivent est une huile de ricin hydrogénée présentant les caractéristiques suivantes :

| | |
|---|---|
| Point de fusion (°C) | 84-89 |
| Indice d'acide (mg KOH/g) | ≤ 2 |
| Indice de saponification (mg KOH/g) | 174/186 |
| Indice d'iode (gI₂/100g) | ≤ 3,5 |
| Indice d'hydroxyle (mg KOH/g) | 155 - 165 |
| Indice d'acétyle | ≥ 139 |
| Insaponifiable (%) | ≤ 1,0 |

Cette huile de ricin hydrogénée présente, après saponification, approximativement la composition en acides gras suivante (pourcentages exprimés en poids par rapport au poids total) :
87% d'acide 12-hydroxy-octadécanoïque
11% d'acide stéarique
2% d'acide palmitique
des traces d'acide (9, 10)-dihydroxystéarique

### Exemple 1 : Produit asphaltique AG 3 0/6 à base d'huile hydrogénée.

Un produit asphaltique AG3 est un produit asphaltique coulé généralement destiné à l'étanchéité des ouvrages d'art. En particulier, ce revêtement est mis en seconde couche d'étanchéité sur les ponts. Il est alors dit asphalte gravillonné pour étanchéité de pont. La composition et les propriétés des asphaltes réalisés sont données dans le tableau 2 suivant :

**Tableau 2**

| composition | Produit asphaltique classique | Produit asphaltique selon l'invention |
|---|---|---|
| Formule granulaire | 30 % filler**, 33 % sable, 37 % 4/6 | |
| Bitume 35/50 | 8,40 ppc | 8,60 ppc |
| Huile de ricin hydrogénée | - | 0,8 ppc |
| Température de fabrication | 230 °C | 170 °C |
| Indentation (1/10 mm) Type B (spécifications * : 15 à 40) | 21 | 22 |
| Maniabilité (W) | 7 | 7 |

| | | |
|---|---|---|
| * fascicule 10 du cahier des prescriptions administratives et techniques communes aux asphaltes coulés (1999) ** filler = fines | | |

Il ressort de ces résultats que le produit asphaltique formulé selon l'invention peut être mis en oeuvre à une température très inférieure, de 60°C, à celle nécessaire pour la mise en oeuvre de la formule de référence. Cet abaissement de la température ne se fait pas au détriment des propriétés physiques du produit asphaltique, qui présente des propriétés d'indentation et de maniabilité au moins équivalentes.

### Exemple 2 : Produit asphaltique AT (trottoir) à base d'huile de ricin hydrogénée.

Un produit asphaltique AT est particulièrement destiné à des revêtements de trottoirs à circulation piétonne. Les compositions et les propriétés des produits asphaltiques réalisés sont données dans le tableau 3 suivant :

**Tableau 3**

| composition | Produit asphaltique classique | Produit asphaltique selon l'invention |
|---|---|---|
| Formule granulaire | 27 filler, 43,5 % sable, 29,5 % 4/6 | |
| Bitume 35/50 | 8,6 ppc | 8,3 ppc |
| Huile de ricin hydrogénée | - | 0,8 ppc |
| Température de fabrication | 230 °C | 160 °C |
| Indentation à 40 °C (1/10 mm) Type B (spécifications * : 20 à 50) | 50 | 30 |
| Indentation à 50°C (1/10 mm) Type B | 178 | 93 |
| Maniabilité (W) | 7 | 7 |

| | | |
|---|---|---|
| * fascicule 10 du cahier des prescriptions administratives et techniques communes aux asphaltes coulés (1999) | | |

Le produit asphaltique selon l'invention peut être mis en oeuvre à une température inférieure de 70 °C à celle nécessaire pour mettre en oeuvre la formule de référence. En outre, le produit asphaltique selon l'invention présente de meilleures caractéristiques d'indentation à 50 °C. On peut noter une plus faible sensibilité thermique du produit asphaltique selon l'invention. Entre 40 et 50 °C, on observe une variation d'indentation de 63 1/10 mm contre 128 1/10 mm pour la formule de référence.

### Exemple 3 : Produit asphaltique AC 1 0/6 à base d'huile hydrogénée.

Un produit asphaltique AC 1 est particulièrement destiné à des revêtements de chaussées légères. Afin d'évaluer les performances en retrait libre d'asphalte à base d'huile hydrogénée, nous avons testé 2 formules (avec ou sans additif) présentant des caractéristiques d'indentation à 40°C proches. Les compositions et les propriétés des asphaltes réalisés sont données dans le tableau 4 suivant :

**Tableau 4**

| composition | Produit asphaltique classique | Produit asphaltique selon l'invention |
|---|---|---|
| Formule granulaire | 32,5 % filler, 32 % sable, 35,5 % 4/6 | |
| Bitume 35/50 | 8,6 ppc | 8,6 ppc |
| Huile de ricin hydrogénée | - | 0,8 ppc |
| Température de fabrication | 230°C | 170 °C |
| Indentation à 40 °C (1/10 mm) Type B (spécifications*: 10 à 30) | 24 | 11 |
| Retrait libre (%) | 0,205 | 0,075 |

| | | |
|---|---|---|
| * fascicule 10 du cahier des prescriptions administratives et techniques communes aux asphaltes coulés (1999) | | |

Les résultats de retrait libre mettent en évidence un intérêt net de l'asphalte à base d'huile hydrogénée : température de fabrication plus faible, bonnes caractéristiques d'indentation, retrait libre moins important..

### Exemple 4 : Enrobé bitumineux BBSG 0/10 à température réduite

Afin d'évaluer l'impact de l'incorporation d'une huile hydrogénée sur la maniabilité d'un enrobé des essais comparatifs ont été réalisés. Les résultats sont présentés dans le tableau 5 suivant :

**Tableau 5**

| composition | Enrobé classique | Enrobé selon l'invention |
|---|---|---|
| Formule granulaire | 2 % filler, 30 % sable ,28 % 2/6, 40 % 6/10 | |
| Bitume 35/50 | 5,6 ppc | 5,3 ppc |
| Huile de ricin hydrogénée | - | 0,3ppc |
| Température de fabrication | 160 °C | 100°C |
| Essai PCG (presse à cisaillement giratoire, NF EN 12697-31) à 60 girations | 9,1 % de vides | 7,4 % de vides |

Il est possible de fabriquer les enrobés bitumineux avec le liant selon l'invention à 100°C seulement. Malgré une température de fabrication plus faible, la compactibilité (% vide) de l'enrobé contenant l'additif obtenu est aussi voire plus maniable que l'enrobé de référence.

## Revendications

1. Produit asphaltique ou bitumineux, qui est un mélange coulable à chaud comprenant un liant thermofusible de type bitumineux avec respectivement une charge minérale ou avec des granulats et éventuellement une charge minérale, les charges minérales sont constituées d'éléments inférieurs à 0,063 mm, de sable dont les éléments sont compris entre 0,063 mm et 2 mm, ledit liant comprenant au moins un additif, présentant une température de fusion supérieure à 60 °C, pour abaisser la température de fabrication du produit asphaltique par rapport à celle du produit de base, **caractérisé en ce que** l'additif est au moins un triglycéride d'acides gras, ledit acide gras étant lui-même choisi dans le groupe constitué par les acides gras saturés comprenant de 12 à 30 atomes de carbone, avantageusement de 12 à 20 atomes de carbone, éventuellement substitués par au moins une fonction hydroxyle ou par un radical alkyle en C₁-C₄, l'additif étant une huile végétale hydrogénée présentant un indice d'iode inférieur à 10 g d'I₂/100g et ledit liant contenant de 1 à 20% en masse de ladite huile végétale hydrogénée par rapport à la masse totale du liant.

2. Produit asphaltique ou bitumineux selon la revendication 1, **caractérisé en ce que** l'acide gras est choisi dans le groupe constitué par l'acide 12-hydroxy-octadécanoïque, l'acide hexadécanoïque, l'acide octadécanoïque, l'acide 9,10-dihydroxy-octadécanoïque, l'acide icosanoïque, l'acide nonadécanoïque, et leurs mélanges.

3. Produit asphaltique ou bitumineux selon l'une quelconque des revendications précédentes, **caractérisé en ce que** l'additif est au moins un triglycéride dont une molécule d'acide gras est constituée de l'acide 12-hydroxy-octadécanoïque.

4. Produit asphaltique ou bitumineux selon l'une quelconque des revendications précédentes, **caractérisé en ce que** l'additif a un point de fusion supérieur à 80°C

5. Produit asphaltique ou bitumineux selon l'une quelconque des revendications précédentes, **caractérisé en ce que** l'additif a un point de fusion inférieur à 140°C.

6. Produit asphaltique ou bitumineux selon l'une quelconque des revendications précédentes, **caractérisé en ce que** ladite huile végétale est choisie dans le groupe constitué par les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah, d'argan et leurs mélanges, en particulier l'huile de ricin.

7. Produit asphaltique ou bitumineux selon l'une quelconque des revendications précédentes, **caractérisé en ce que** l'huile végétale hydrogénée présente un indice d'iode inférieur à 5 g d'I₂/100g.

8. Produit asphaltique ou bitumineux selon l'une quelconque des revendications précédentes, **caractérisé en ce que** l'huile végétale hydrogénée présente un indice d'acide inférieur à 10 mg KOH/g, avantageusement inférieur à 5 mg KOH/g.

9. Produit asphaltique ou bitumineux selon l'une quelconque des revendications précédentes, **caractérisé en ce que** le liant comprend en outre un ou plusieurs additifs choisis dans le groupe constitué par :
- une cire d'origine animale, végétale ou d'hydrocarbure,
- un dérivé d'acide gras choisi dans le groupe constitué par les diesters d'acide gras, les éthers d'acide gras, les cires d'amide, les cires de diamide et leurs mélanges,
- une résine naturelle, éventuellement modifiée, d'origine végétale, et
- une zéolithe, naturelle et/ou synthétique, ou sa phase de synthèse initiale amorphe.

10. Produit asphaltique ou bitumineux selon l'une quelconque des revendications précédentes, **caractérisé en ce qu'**il comprend en outre un agent fluxant.

11. Produit asphaltique ou bitumineux selon l'une quelconque des revendications précédentes, **caractérisé en ce qu'**il comprend en outre un élastomère ou un plastomère notamment un copolymère de styrène-butadiène-styrène, de styrène-butadiène, ou de styrène-isoprène-styrène ou des copolymères d'éthylène.

12. Procédé de préparation d'un produit asphaltique coulable à chaud, comprenant le mélange d'un liant thermofusible, éventuellement additivé de polymères, avec des charges minérales, des agrégats d'asphaltes et au moins un additif pour abaisser la température de fabrication du produit asphaltique tel que défini à l'une des revendications 1 à 8, dans lequel la température de mélange est comprise entre 140°C et 180°C.

13. Procédé de préparation d'enrobés bitumineux, comprenant le mélange d'un liant thermofusible, éventuellement additivé de polymères, avec des charges minérales, des agrégats d'enrobés et au moins un additif pour abaisser la température de fabrication du produit asphaltique tel que défini à l'une des revendications 1 à 8, dans lequel la température de mélange est comprise entre 90°C et 130°C.

14. Produit asphaltique coulable à chaud, **caractérisé en ce qu'**il comprend un liant thermofusible selon l'une quelconque des revendications 1 à 11 et des charges, minérales et/ou synthétiques et des agrégats d'asphalte.

15. Enrobés bitumineux, **caractérisé en ce qu'**ils comprennent un liant thermofusible selon l'une quelconque des revendications 1 à 11, des agrégats d'enrobés et des charges minérales et/ou synthétiques.

16. Utilisation d'un produit asphaltique selon la revendication 14 ou d'enrobés bitumineux selon la revendication 15, pour la fabrication de revêtement de chaussées, de trottoirs ou autres aménagements urbains, de couches d'étanchéité d'ouvrages et bâtiments, de mastic, de joints de pavé, de produits de scellement à chaud.

## Patentansprüche

1. Asphalt- oder Bitumenprodukt, das ein warmgießbares Gemisch ist, umfassend ein Heißschmelzbindemittel bituminösen Typs mit jeweils einer mineralischen Charge oder mit Granulaten und eventuell einer mineralischen Charge, wobei die mineralischen Chargen von Elementen kleiner als 0,063 mm gebildet sind, von Sand, dessen Elemente zwischen 0,063 mm und 2 mm inklusive sind, wobei das Bindemittel mindestens einen Zusatzstoff umfasst, der eine Schmelztemperatur über 60 °C aufweist, um die Herstellungstemperatur des Asphaltprodukts in Bezug zu der des Basisprodukts zu senken, **dadurch gekennzeichnet, dass** der Zusatzstoff mindestens ein Triglyzerid von Fettsäuren ist, wobei die Fettsäure selbst aus der Gruppe ausgewählt ist, die von den gesättigten Fettsäuren gebildet ist, die 12 bis 30 Kohlenstoffatome, vorzugsweise 12 bis 20 Kohlenstoffatome umfassen, eventuell substituiert von mindestens einer Hydroxylfunktion oder von einem C₁-C₄-Alkylradikal, wobei der Zusatzstoff ein hydrogeniertes Pflanzenöl ist, das einen Jodindex unter 10 g I₂/100 g aufweist und das Bindemittel 1 bis 20 Ma% des hydrogenierten Pflanzenöls in Bezug zur Gesamtmasse des Bindemittels enthält.

2. Asphalt- oder Bitumenprodukt nach Anspruch 1, **dadurch gekennzeichnet, dass** die gesättigte Fettsäure aus der Gruppe ausgewählt ist, die von der 12-Hydroxy-octadecansäure, der Hexadecansäure, der Octadecansäure, der 9,10-Dihydroxy-octadecansäure, der Eicosansäure, der Nonadecansäure und ihren Gemischen gebildet ist.

3. Asphalt- oder Bitumenprodukt nach einem der vorangehenden Ansprüche, **dadurch gekennzeichnet, dass** der Zusatzstoff mindestens Triglyzerid ist, von dem ein Fettsäuremolekül von der 12-Hydroxy-octadecansäure gebildet ist.

4. Asphalt- oder Bitumenprodukt nach einem der vorangehenden Ansprüche, **dadurch gekennzeichnet, dass** der Zusatzstoff einen Schmelzpunkt über 80 °C hat.

5. Asphalt- oder Bitumenprodukt nach einem der vorangehenden Ansprüche, **dadurch gekennzeichnet, dass** der Zusatzstoff einen Schmelzpunkt unter 140 °C hat.

6. Asphalt- oder Bitumenprodukt nach einem der vorangehenden Ansprüche, **dadurch gekennzeichnet, dass** das Pflanzenöl aus der Gruppe ausgewählt ist, die von dem Lein-, Raps-, Sonnenblumen-, Soja-, Oliven-, Palm-, Rizin-, Holz-, Mais-, Kürbis-, Traubenkern-, Jojoba-, Sesam-, Walnuss-, Haselnuss-, Mandel-, Shea-, Macamadia-, Baumwoll-, Luzernen-, Roggen-, Färberdistel-, Erdnuss-, Kopra-, Arganöl und ihren Gemischen, insbesondere dem Rizinöl, gebildet ist.

7. Asphalt- oder Bitumenprodukt nach einem der vorangehenden Ansprüche, **dadurch gekennzeichnet, dass** das hydrogenierte Pflanzenöl einen Jodindex unter 5 g I₂/100 g aufweist.

8. Asphalt- oder Bitumenprodukt nach einem der vorangehenden Ansprüche, **dadurch gekennzeichnet, dass** das hydrogenierte Pflanzenöl einen Säureindex unter 10 mg KOH/g, vorzugsweise unter 5 mg KOH/g, aufweist.

9. Asphalt- oder Bitumenprodukt nach einem der vorangehenden Ansprüche, **dadurch gekennzeichnet, dass** das Bindemittel ferner einen oder mehrere Zusatzstoffe umfasst, die aus der Gruppe ausgewählt sind, die gebildet ist von:
- einem tierischen, pflanzlichen oder Kohlenwasserstoffwachs,
- einem Fettsäurederivat, ausgewählt aus der Gruppe, die von den Fettsäurediestern, den Fettsäureethern, den Amidwachsen, den Diamidwachsen und ihren Gemischen gebildet ist,
- einem pflanzlichen Naturharz, eventuell modifiziert, und
- einem natürlichen und/oder synthetischen Zeolith oder seiner amorphen Ausgangssynthesephase.

10. Asphalt- oder Bitumenprodukt nach einem der vorangehenden Ansprüche, **dadurch gekennzeichnet, dass** es ferner ein Flussmittel umfasst.

11. Asphalt- oder Bitumenprodukt nach einem der vorangehenden Ansprüche, **dadurch gekennzeichnet, dass** es ferner ein Elastomer oder ein Plastomer, insbesondere ein Styrol-butadiene-styrol-, Styrol-butadien- oder Styrol-isopren-styrol-Copolymer oder Ethylencopolymere umfasst.

12. Herstellungsverfahren eines warmgießbaren Asphaltprodukts, umfassend das Mischen eines Heißschmelzbindemittels, eventuell mit Zuschlag von Polymeren, mit mineralischen Chargen, Asphaltaggregaten und mindestens einem Zusatzstoff zur Absenkung der Herstellungstemperatur des Asphaltprodukts nach einem der Ansprüche 1 bis 8, wobei die Gemischtemperatur zwischen 140 °C und 180 °C inklusive ist.

13. Herstellungsverfahren von Bitumenasphalt, umfassend das Mischen eines Heißschmelzbindemittels, eventuell mit Zuschlag von Polymeren, mit mineralischen Chargen, Asphaltaggregaten und mindestens einem Zusatzstoff zur Absenkung der Herstellungstemperatur des Asphaltprodukts nach einem der Ansprüche 1 bis 8, wobei die Gemischtemperatur zwischen 90 °C und 130 °C inklusive ist.

14. Warmgießbares Asphaltprodukt, **dadurch gekennzeichnet, dass** es ein Heißschmelzbindemittel nach einem der Ansprüche 1 bis 11 und mineralische und/oder synthetische Chargen und Asphaltaggregate umfasst.

15. Bitumenasphalte, **dadurch gekennzeichnet, dass** sie ein Heißschmelzbindemittel nach einem der Ansprüche 1 bis 11, Asphaltaggregate und mineralische und/oder synthetische Chargen umfassen.

16. Verwendung eines Asphaltprodukts nach Anspruch 14 oder von Bitumenasphalten nach Anspruch 15 für die Herstellung von Straßen-, Bürgersteig- oder Beschichtungen anderer Stadteinrichtungen, von Gebäude- und Baudichtschichten, von Mastix, von Pflasterfugen, von Warmgussprodukten.

## Claims

1. Asphalt or bituminous product, which is a hot-melt flowable mixture comprising a hot-melt binder of bituminous type respectively with a mineral filler or with granulates and optionally a mineral filler, the mineral fillers consist of elements of less than 0.063 mm, sand with elements between 0.063 mm and 2 mm, said binder comprising at least one additive, having a melting temperature greater than 60°C, for lowering the production temperature of the asphalt product relative to that of the base product, **characterized in that** the additive is at least one fatty acid triglyceride, said fatty acid being itself selected from the group consisting of saturated fatty acids comprising from 12 to 30 carbon atoms, preferably from 12 to 20 carbon atoms, optionally substituted by at least one hydroxyl function or by a C₁-C₄ alkyl radical, wherein the additive is a hydrogenated vegetable oil having an iodine value of less than 10 g of I₂/100g, and wherein said binder contains 1 to 20% by mass of said hydrogenated vegetable oil relative to the total mass of the binder.

2. The asphalt or bituminous product as claimed in Claim 1, **characterized in that** the fatty acid is selected from the group consisting of 12-hydroxy-octadecanoic acid, hexadecanoic acid, octadecanoic acid, 9,10-dihydroxy-octadecanoic acid, icosanoic acid, nonadecanoic acid, and mixtures thereof.

3. The asphalt or bituminous product as claimed in any one of the preceding claims, **characterized in that** the additive is at least one triglyceride with a fatty acid molecule consisting of 12-hydroxy-octadecanoic acid.

4. The asphalt or bituminous product as claimed in any one of the preceding claims, **characterized in that** the additive has a melting point greater than 80°C.

5. The asphalt or bituminous product as claimed in any one of the preceding claims, **characterized in that** the additive has a melting point less than 140°C.

6. The asphalt or bituminous product as claimed in any one of the preceding claims, **characterized in that** said vegetable oil is selected from the group consisting of oils of flax, rape seed, sunflower, soya, olive, palm, castor, wood, maize, squash, grape-seed, jojoba, sesame, walnut, hazelnut, almond, shea butter, macadamia, cotton, lucerne, rye, safflower, peanut, copra, argan and mixtures thereof, in particular castor oil.

7. The asphalt or bituminous product as claimed in any one of the preceding claims, **characterized in that** the hydrogenated vegetable oil has an iodine value of less than 5 g of I₂/100g.

8. The asphalt or bituminous product as claimed in any one of the preceding claims, **characterized in that** the hydrogenated vegetable oil has an acid value of less than 10 mg KOH/g, preferably less than 5 mg KOH/g.

9. The asphalt or bituminous product as claimed in any one of the preceding claims, **characterized in that** the binder further comprises one or more additives selected from the group consisting of:
- a wax of animal, plant or hydrocarbon origin,
- a fatty acid derivative selected from the group consisting of fatty acid diesters, fatty acid ethers, amide waxes, diamide waxes and mixtures thereof,
- a natural, optionally modified, resin of plant origin, and
- a natural and/or synthetic zeolite, or its amorphous initial synthesis phase.

10. The asphalt or bituminous product as claimed in any one of the preceding claims, **characterized in that** it further comprises a flux agent.

11. The asphalt or bituminous product as claimed in any one of the preceding claims, **characterized in that** it further comprises an elastomer or a plastomer, especially a styrene-butadiene-styrene, styrene-butadiene or styreneisoprene-styrene copolymer, or copolymers of ethylene.

12. A process for preparing a hot-melt flowable asphalt product, comprising mixing a hot-melt binder, optionally added with polymers, with mineral fillers, asphalt aggregates and at least one additive for lowering the production temperature of the asphalt product such as defined in any one of Claims 1 to 8, in which the mixing temperature is between 140°C and 180°C.

13. A process for preparing bituminous coated materials, comprising mixing a hot-melt binder, optionally added with polymers, with mineral fillers, coated material aggregates and at least one additive for lowering the production temperature of the asphalt product such as defined in any one of Claims 1 to 8, in which the mixing temperature is between 90°C and 130°C.

14. A hot-melt flowable asphalt product, **characterized in that** it comprises a hot-melt binder such as defined in any one of Claims 1 to 11 and mineral and/or synthetic fillers, and asphalt aggregates.

15. A bituminous coated material, **characterized in that** it comprises a hot-melt binder such as defined in any one of Claims 1 to 11, coated material aggregates and mineral and/or synthetic fillers.

16. Use of the asphalt product as claimed in Claim 14 or of the bituminous coated material as claimed in Claim 15, for making road surfaces, pavement surfaces or other urban facilities, sealing layers for engineering structures and buildings, sealants, pavement seals and heat sealing materials.
